# FASCICULE DE BREVET EUROPEEN

(11) **EP 4 400 370 B1**
(45) Date de publication et mention de la délivrance du brevet: **25.06.2025**
(21) Numéro de dépôt: 23217015.9
(22) Date de dépôt: 15.12.2023
(51) Int. Cl.: B60R 19/18, B60R 21/34, B60R 19/52

(54) **ARMATURE DE PEAU DE PARE-CHOCS DE VÉHICULE AUTOMOBILE**
STOSSFÄNGER-HAUTBESCHLAG FÜR EIN KRAFTFAHRZEUG
BUMPER SKIN REINFORCEMENT FOR A MOTOR VEHICLE

(30) Priorité: 13.01.2023 FR 2300335
(43) Date de publication de la demande: 17.07.2024
(73) Titulaire: Stellantis Auto SAS, 78300 Poissy (FR)
(72) Inventeur: PERON, RODOLPHE, 95220 HERBLAY (FR); BOUDAN, JULIEN, 91210 DRAVEIL (FR)
(74) Mandataire: BCIP

(56) Documents cités:
- FR-A1- 3 115 249
- FR-A1- 3 122 155

## Description

L'invention traite du choc piéton contre un ensemble de pare-chocs avant de véhicule automobile. L'invention se rapporte au domaine des ensembles de pare-chocs avant de véhicule automobile. L'invention propose une armature de pare-chocs avant de véhicule automobile. L'invention a également pour objet un véhicule automobile.

Un véhicule automobile présente communément un ensemble de pare-chocs avant. Ce dernier forme partiellement la carrosserie du véhicule automobile, et présente différents écrans extérieurs dont la précision d'assemblage contribue à la qualité perçue comme à l'aérodynamisme. Ces écrans extérieurs matérialisent la peau de pare-chocs, et jouxtent des dispositifs lumineux, des ailes latérales et un capot avant. Un écran extérieur, telle une grille d'entrée d'air est fréquemment intégrée en position centrale.

Les écrans extérieurs doivent respecter différents critères de réparabilité en fonction de la vitesse des chocs qu'elle est susceptible d'amortir. Par exemple pour un choc à faible vitesse, l'ensemble de pare-chocs avant est conçu pour absorber le choc par déformation élastique, donc sans nécessiter de réparation ultérieure. Par faible vitesse, on entend un choc à vitesse inférieure ou égale à 10 km/h. Lors de ce choc, la peau de pare-chocs se déforme de manière élastique lors du contact avec l'obstacle, puis revient en position, sans que ne subsiste de déformation permanente après éloignement de l'obstacle impliqué dans le choc.

Une armature de pare-chocs permet de maintenir les différents écrans extérieurs. L'armature est un élément essentiellement rigide et permet de maintenir en forme la peau de pare-chocs, qui est généralement réalisée par une pièce en matériau plastique souple de faible épaisseur. Cette armature est généralement fixée sur un support, telle une traverse supérieure.

En circulation, un véhicule automobile est susceptible d'être impliqué dans un évènement de type choc piéton. Dans pareil cas, la tête d'un piéton peut heurter le capot du véhicule automobile à l'aplomb de l'armature. Ainsi, la rigidité de cette armature de pare-chocs devient potentiellement un inconvénient en termes de sécurité. En effet, l'armature matérialise un point dur atteint, au travers du capot avant, par la tête lors du choc piéton. Le risque de blessures et leurs gravités augmentent.

Le document FR3119353A1 présente un véhicule automobile comprenant une armature support de pare-chocs. L'armature comprend au moins un pied d'armature destiné à supporter une traverse de pare-chocs, au moins un pied d'armature présentant une zone de rupture conçue pour subir au moins une rupture, lorsque l'armature est montée sur une face avant d'un véhicule automobile et que le véhicule est soumis à un choc piéton jambes. Cette armature préserve significativement les jambes d'un piéton dans l'éventualité d'une collision. Toutefois, il existe un besoin de préserver d'autres membres du piéton, notamment la tête.

Le document FR3115249A1 présente un véhicule automobile comprenant une armature de pare-chocs. L'armature de pare-chocs comporte une paroi supérieure s'étendant dans un plan, deux jambes d'appuis, destinées à s'appuyer à une poutre de pare-chocs et s'étendant toutes les deux du même côté de la paroi supérieure. La paroi supérieure comporte deux surfaces frangibles disposées chacune dans le prolongement de chacune des jambes d'appuis et entourées chacune d'une zone frangible.

Le véhicule comporte un capot avant, par exemple un capot moteur, mobile entre une position ouverte et une position fermée. Le capot comporte des butées disposées chacune en vis-à-vis des surfaces frangibles. Cet agencement apporte une sécurité en cas de choc piéton. Il existe toutefois un besoin d'améliorer encore cette sécurité.

Le document FR3122155A1 présente un véhicule automobile comprenant une armature pour le maintien d'un pare-chocs. L'armature comprend une partie avant servant de support à un pare-chocs, et une partie supérieure en vis-à-vis d'un capot du véhicule automobile. La partie supérieure de l'armature comporte une ligne de pliage. La ligne de pliage s'étend entre deux moyens de fixation d'un enjoliveur de nez de capot et sépare la partie supérieure en une zone proximale et une zone distale. La zone distale prend appui sur une traverse supérieure.

Selon une variante de réalisation, la partie supérieure de l'armature comprend des moyens frangibles permettent le détachement de la zone proximale des moyens de fixation de l'enjoliveur de nez de capot. Ce mode de réalisation permet d'offrir une plus grande liberté de déformation de la zone proximale lors d'un impact piéton.

Cette armature améliore significativement la sécurité. Toutefois, il existe un besoin de réduire les points durs. Il existe un besoin d'améliorer encore la sécurité face à une imprévisible collision avec un piéton.

L'invention a pour objectif de répondre à au moins un des problèmes ou inconvénients rencontrés dans l'art antérieur. En particulier, l'invention a pour objectif d'améliorer la sécurité. L'invention a également pour objectif d'optimiser la sécurité, la qualité perçue, et le maintien offerts par une armature de maintien de peau de pare-chocs d'un véhicule automobile.

Selon un premier aspect, l'invention propose une armature d'ensemble de pare-chocs avant de véhicule automobile, l'armature comprenant une paroi avant destinée à être fixée à un écran extérieur d'ensemble de pare-chocs avant, et une paroi arrière ; la paroi arrière comprenant une portion avant inclinée par rapport à la paroi avant, et une portion arrière ; remarquable en ce que la portion arrière comprend une zone de liaison destinée à être liée à un support du véhicule automobile, la zone de liaison comprenant des moyens sécables de sorte à détacher la portion arrière du support en cas de choc piéton.

L'invention permet de libérer l'armature de son support à l'arrière en cas de choc piéton. Ainsi, l'armature reste libre de se déplacer et éventuellement de se déformer, afin de préserver l'intégrité physique du piéton. Ceci limite son caractère rigide qui est inhérent à sa fonction de maintien de l'écran extérieur. Ainsi, l'armature reste rigide lors d'une sollicitation statique, et devient souple lors d'une sollicitation dynamique prédéfinie.

Préférentiellement, la paroi arrière comprend une face inférieure et une face supérieure, la zone de liaison comprenant un pion de positionnement faisant saillie en face inférieure ; et/ou la zone de liaison comprend un orifice de fixation traversant la portion arrière.

Préférentiellement, les moyens sécables comprennent une ligne de rupture entourant la zone de liaison, préférentiellement la ligne de rupture forme un rectangle ou une forme oblongue.

Préférentiellement, les moyens sécables comprennent une découpe traversant la portion arrière de la paroi arrière.

Préférentiellement, la paroi arrière comprend une portion de jonction s'étendant de la portion avant à la portion arrière, la portion de jonction étant inclinée par rapport à la portion arrière et la portion avant, la portion avant et la portion arrière étant décalées verticalement.

Préférentiellement, la paroi arrière comprend une nervure de rigidification s'étendant le long de la portion arrière et la portion de jonction afin de maintenir une inclinaison entre la portion arrière et la portion de jonction en cas de choc piéton, préférentiellement la portion avant et la portion arrière sont parallèles.

Préférentiellement, la paroi arrière comprend une zone charnière entre la portion avant et la portion de jonction ; préférentiellement la zone charnière est apte à réduire une inclinaison entre la portion avant et la portion de jonction en cas de choc piéton.

Préférentiellement, la portion arrière comprend un pilier de maintien comprenant des moyens de fixation, les moyens sécables étant transversalement à distance dudit pilier de maintien.

Préférentiellement, la zone de liaison est une zone de fixation.

Préférentiellement, l'armature est venue de matière.

Préférentiellement, l'armature est monobloc.

Préférentiellement, l'armature comprend un matériau plastique.

Préférentiellement, la paroi avant comprend des orifices de fixation de l'écran extérieur.

Préférentiellement, la portion arrière comprend un ajour central arrière.

Préférentiellement, la portion avant comprend un ajour central avant de verrouillage de capot avant.

Préférentiellement, la portion avant est décalée verticalement par rapport à la portion arrière d'au moins 50 mm et/ou d'au plus 70 mm.

Préférentiellement, la paroi avant comprend des jambes de maintien de l'écran extérieur, lesdites jambes de maintien s'étendant vers le bas.

Préférentiellement, l'armature est une armature de fixation de l'écran extérieur au support.

Préférentiellement, l'écran extérieur comprend un panneau de peau de pare-chocs ou une grille d'entrée d'air.

Selon un autre aspect, l'invention propose une armature d'ensemble de pare-chocs avant de véhicule automobile, l'armature comprenant une portion avant destinée à maintenir un élément de peau de pare-chocs ou un panneau extérieur, ou une grille avant, ou un écran avant de façade avant ; une portion arrière ; remarquable en ce que la portion arrière comprend une zone de fixation fusible et/ou une zone de fixation destinée à être fixée à un support du véhicule automobile, la zone de fixation comprend des moyens sécables ; afin de libérer l'armature du support de fixation en cas de choc piéton.

Selon un autre aspect, l'invention propose un véhicule automobile comprenant un ensemble de pare-chocs avant avec une armature, remarquable en ce que l'armature est conforme à l'invention.

Préférentiellement, les moyens sécables sont des moyens sécables arrière ; la paroi arrière comprenant en outre des moyens sécables avant aptes à coopérer avec une butée d'un capot avant, lesdits moyens sécables avant étant aptes à rompre en cas de choc piéton sur le capot avant.

Préférentiellement, le véhicule automobile comprend un support qui est un cadre de façade avant

Préférentiellement, le véhicule automobile comprend en outre un échangeur de chaleur en arrière dudit cadre de façade avant.

Selon un autre aspect, l'invention propose un véhicule automobile comprenant un support, un ensemble de pare-chocs avant avec un écran extérieur et une armature de fixation de l'écran extérieur au support ; l'armature comprenant une paroi avant maintenant l'écran extérieur, et une paroi arrière inclinée par rapport à la paroi avant et fixée au support, remarquable en ce que la paroi arrière comprend une zone de liaison liée à au support, la zone de liaison comprenant des moyens sécables de sorte à détacher la paroi arrière du support en cas de collision avec un piéton.

L'invention sera bien comprise et d'autres aspects et avantages apparaîtront clairement à la lecture de la description qui suit, donnée en référence aux figures annexées et énumérées ci-dessous.
La figure 1 est une vue de face d'un véhicule automobile selon l'invention.
La figure 2 est une vue arrière d'un ensemble de pare-chocs de véhicule automobile selon l'invention.
La figure 3 est une coupe d'un ensemble de pare-chocs de véhicule automobile selon l'invention en configuration de montage et en cas de choc piéton.
La figure 4 est une vue du dessous d'une armature et d'un écran extérieur de pare-chocs de véhicule automobile selon l'invention.
La figure 5 est une vue du dessous d'une zone de liaison d'armature pour pare-chocs de véhicule automobile selon l'invention.

Dans la description qui suit, le terme « comprendre » est synonyme de « inclure » et n'est pas limitatif en ce qu'il autorise la présence d'autres éléments dans le véhicule automobile ou l'armature auquel il se rapporte. Il est entendu que le terme « comprendre » inclut les termes « consister en ». Les termes « externe » et « interne » désigneront respectivement ce qui est orienté vers l'extérieur du véhicule et vers l'intérieur du véhicule.

Dans la présente description, le terme « longitudinal », le terme « longitudinalement », le terme « transversal », et le terme « transversalement » sont employés selon le référentiel du véhicule, dans la configuration de montage. Le terme « longitudinal » correspond à la direction principale de déplacement du véhicule. Le terme « transversal » correspond à une direction perpendiculaire à la direction principale de déplacement du véhicule. Le terme « avant » est en référence au sens principal de déplacement du véhicule. Le terme « arrière » désigne l'opposé de l'avant du véhicule.

L'axe X représente la direction longitudinale, l'axe Y représente la direction transversale, et l'axe Z représente la direction verticale du véhicule automobile. Ces trois axes définissent un trièdre direct dont l'orientation est conservée au travers des figures.

Dans la présente description, les plages de valeurs comprennent les bornes qui les délimitent.

Dans la présente description, les caractéristiques techniques sont définies dans la configuration de montage de l'armature et de l'ensemble de pare-chocs avant, à moins que le contraire ne soit mentionné explicitement.

Au travers de la description, les différentes figures utilisent les mêmes signes de référence pour désigner des entités identiques ou similaires.

Dans la présente invention, on entend par « choc piéton » la collision entre un véhicule automobile et un piéton lorsque le véhicule automobile circule.

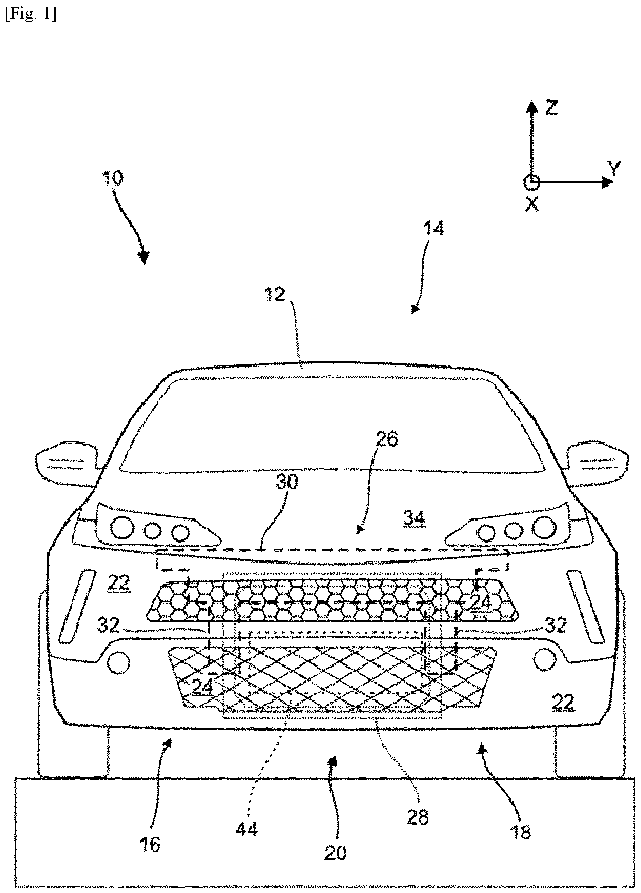

La figure 1 représente un véhicule automobile 10 selon l'invention. Le véhicule automobile 10 comprend des moyens de stockage d'énergie, telle une batterie électrique, et au moins un moteur (non représenté) adaptés pour entraîner ledit véhicule automobile 10.

Le véhicule automobile 10 comprend une structure 12, également appelée caisse. La structure 12 forme une ossature et supporte différents organes du véhicule automobile 10, dont le moteur et des ouvrants. La structure 12 forme partiellement la carrosserie 14 du véhicule au niveau du toit, des ailes avant, des piliers. La carrosserie 14 forme l'enveloppe externe du véhicule automobile 10.

La carrosserie 14 comprend notamment un capot avant 34. Le capot avant 34 est un ouvrant donnant accès à un compartiment avant. Il est mobile entre une position fermée et une position ouverte. En cas de collision avec un piéton, le capot avant 34 accueille le piéton (non représenté), notamment sa tête.

Le véhicule automobile 10 comprend, en outre, un ensemble de pare-chocs avant 16, tel un ensemble de façade avant. L'ensemble de pare-chocs avant 16, en particulier chacun de ses éléments, est adapté pour résister à des chocs à des vitesses jusqu'à 10 km/h, préférentiellement jusqu'à 15 km/s, sans qu'il n'y ait besoin de remplacer de pièces spécifiques du véhicule, et notamment tout ou partie de la peau de pare-chocs 18. L'ensemble de pare-chocs avant 16 est également adapté pour limiter l'importance des blessures dans l'éventualité d'un choc piéton.

La peau de pare-chocs 18 comprend plusieurs éléments extérieurs, dont des écrans extérieurs 20. Les écrans extérieurs 20 comprennent des panneaux extérieurs 22 et au moins une grille extérieure 24. Selon une option, les écrans extérieurs 20 comprennent plusieurs grilles extérieures 24, telles des grilles d'entrée d'air, dont une grille supérieure et une grille inférieure. Ces grilles extérieures 24 forment des protections contre des projections.

Chaque grille extérieure 24 présente un maillage. Tout type de maille peut être sélectionné en fonction des besoins de protection et de l'entrée d'air correspondante. Chaque grille extérieure 24 forme généralement une paroi perforée. Elle s'étend généralement verticalement et transversalement. Chaque grille extérieure 24 est apte à barrer au moins partiellement l'ouverture correspondante.

Au moins une des grilles extérieures 24 contribue à capter un flux de comburant lorsque le véhicule automobile 10 est décliné dans sa version thermique. L'autre des grilles extérieures 24 offre un flux d'air pour une climatisation d'habitacle ; que le véhicule électrique soit à entraînement électrique, thermique ou hybride. Le véhicule automobile 10 comprend au moins un échangeur de chaleur 44. L'échangeur de chaleur 44 est apte à refroidir le moteur ou l'habitacle dans le cas d'un équipement de climatisation. L'échangeur de chaleur 44 est également apte à chauffer l'habitacle via une pompe à chaleur.

L'ensemble de pare-chocs avant 16 comprend un support 26. Le support 26 permet de maintenir, éventuellement indirectement, les écrans extérieurs 20. Il est lié à la structure 12 du véhicule automobile 10. Le support 26 peut être fixé à des brancards avant, éventuellement par l'intermédiaire de caissons d'absorption de chocs. Le support 26 peut être un cadre de façade avant 28. Le cadre de façade avant 28 peut former un conduit d'entrée d'air communiquant avec au moins une des grilles extérieures 24. L'ensemble de pare-chocs avant 16 peut comprendre une poutre supérieure et une poutre inférieure (non représentées). Les écrans extérieurs 20 comprennent un revêtement extérieur telle une couche de peinture de la teinte de la structure 12 du véhicule automobile 10. L'échangeur de chaleur 44 est derrière le cadre de façade avant 28. Il y est optionnellement fixé.

L'ensemble de pare-chocs avant 16 comprend également une armature 30. L'armature 30 permet de relier au moins un ou plusieurs écrans extérieurs 20 au support 26. Ainsi, l'armature 30 rigidifie la peau de pare-chocs 18. L'armature 30 contribue à positionner les écrans extérieurs 20 les uns par rapport aux autres, et donc optimise la qualité perçue. L'échangeur de chaleur 44 est derrière l'armature 30. L'armature 30 peut être entre des dispositifs lumineux avant.

L'armature 30 comprend au moins une jambe de maintien 32, par exemple au moins deux jambes de maintien 32. Les jambes de maintien 32 peuvent être des jambes latérales. Elles peuvent s'étendre vers le bas. Les jambes de maintien 32 participent au maintien des grilles extérieures 24.

Le véhicule automobile peut par exemple être un véhicule automobile particulier ou un véhicule automobile utilitaire.

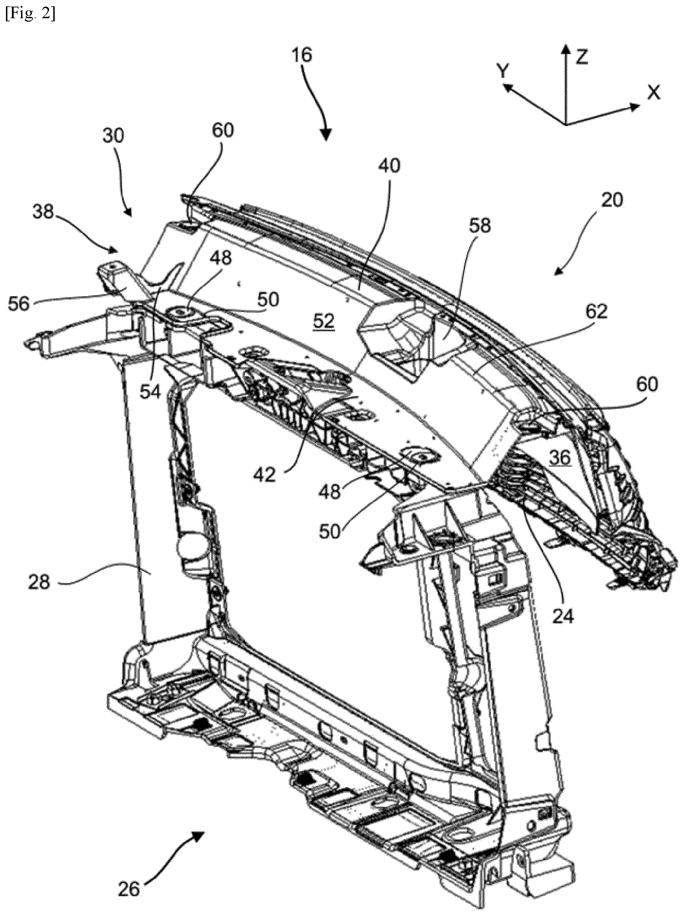

La figure 2 présente un ensemble de pare-chocs avant 16 de véhicule automobile. Le véhicule automobile peut correspondre à celui présenté en relation avec la figure 1.

L'ensemble de pare-chocs avant 16 de véhicule automobile comprend une armature 30. L'armature 30 comprend une paroi avant 36 fixée à un écran extérieur 20 de l'ensemble de pare-chocs avant 16. En l'occurrence, l'écran extérieur 20 est une grille extérieure 24. L'armature 30 comprend également une paroi arrière 38. La paroi arrière 38 est segmentée longitudinalement. Elle comprend une portion avant 40 inclinée par rapport à la paroi avant 36, et une portion arrière 42 reposant sur un support 26. Elle présente un profil en lettre « S ».

La portion arrière 42 comprend au moins une zone de liaison 48 liée à un support 26 du véhicule automobile ; en l'occurrence un cadre de façade avant 28. La zone de liaison 48 comprend des moyens sécables 50. Les moyens sécables 50 sont configurés de sorte à rompre, et à détacher la portion arrière 42 du support 26 en cas de choc piéton. Ainsi l'armature 30 est libérée du cadre de façade avant 28, ce qui facilite son mouvement en cas de collision avec un piéton. Le risque de blessure devient moindre. La sécurité pour les usagers de la route est optimisée.

Dans la présente illustration, la portion arrière 42 comprend une zone de liaison 48 à gauche et une zone de liaison 48 à droite. Elles sont transversalement opposées. Chacune d'elles comporte des moyens sécables 50.

Chaque moyen sécable 50 associé à une zone de liaison 48 comprend une ligne de rupture entourant la zone de liaison 48 correspondante. La ligne de rupture peut former une ligne de fragilité entourant la zone de liaison 48. Selon une option, la ligne de rupture forme un rectangle, ou une forme oblongue, ou un ovale ; selon la forme de la zone de liaison 48. Toute autre forme appropriée peut être sélectionnée.

La paroi arrière 38 comprend une portion de jonction 52 s'étendant de la portion avant 40 à la portion arrière 42. La portion avant 40 et la portion arrière 42 sont parallèles, et par exemple horizontales. Elles sont chacune planes. La portion de jonction 52 est inclinée par rapport à la portion arrière 42 et la portion avant 40. La portion de jonction 52 est inclinée par rapport à l'horizontale.

La paroi arrière 38 comprend une nervure de rigidification 54 apte à maintenir une inclinaison entre la portion arrière 42 et la portion de jonction 52 en cas de choc piéton. La nervure de rigidification 54 agit comme une équerre de renfort. Elle bloque l'orientation de la portion arrière 42 par rapport à la portion de jonction 52.

La portion arrière 42 comprend un pilier de maintien 56. Le pilier de maintien 56 s'étend verticalement depuis la portion arrière 42. Le pilier de maintien 56 forme un bossage, par exemple un bossage arrière. Le pilier de maintien 56 présente des moyens de fixation à son sommet. Il peut servir à supporter le capot avant (non représenté). Les moyens sécables 50 sont transversalement à distance du pilier de maintien 56. Ainsi, la présence du pilier de maintien 56 facilite le mouvement de la portion arrière 42 au niveau des moyens sécables 50.

La portion avant 40 comprend un ajour central avant 58 pour le verrouillage de capot avant. L'ajour central avant 58 traverse verticalement l'armature 30. Elle est longitudinalement au niveau de la paroi avant 36.

Les moyens sécables 50 peuvent être des moyens sécables arrière. Selon une option, la paroi arrière 38 comprend en outre des moyens sécables avant 60, par exemple dans la portion avant 40. Les moyens sécables avant 60 sont aptes à coopérer avec une butée de capot avant (non représentés). Ces moyens sécables avant 60 sont aptes à rompre en cas de choc piéton contre le capot avant, par exemple contre le nez de capot, c'est-à-dire la partie avant du capot avant.

La paroi arrière 38 comprend au moins une zone charnière 62 entre la portion avant 40 et la portion de jonction 52. La zone charnière 62 s'étend transversalement. Elle forme une ligne arquée. La zone charnière 62 forme un coude ou une cornière sur la paroi arrière 38. Elle favorise une flexion, un basculement de la portion de jonction 52 par rapport à la portion avant 40.

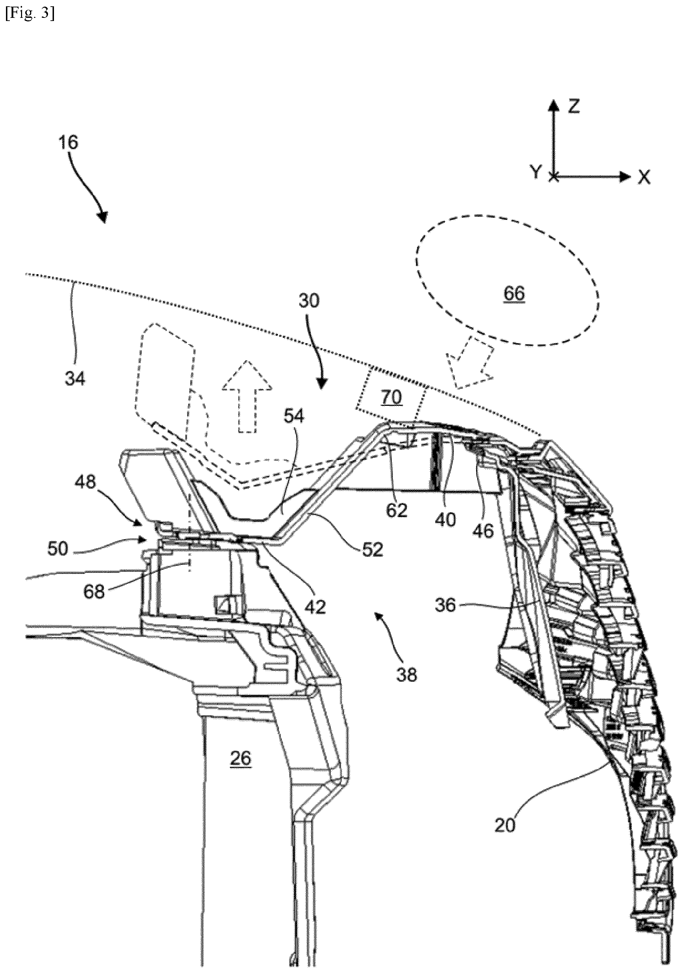

La figure 3 présente une coupe d'un ensemble de pare-chocs avant 16 de véhicule automobile. Le véhicule automobile peut correspondre à celui présenté en relation avec l'une des figures 1 à 2. L'ensemble de pare-chocs avant 16 est représenté tel que monté (illustré en trait plein), et déformé (illustré en trait pointillés) suite à un choc piéton. Une tête 66 de piéton heurtant le capot avant 34 au droit de l'armature 30 est représentée.

L'armature 30 comprend une paroi avant 36 à laquelle est fixée un écran extérieur 20 ; ou écran avant. L'armature 30 comprend par ailleurs une paroi arrière 38, la paroi arrière 38 comprenant une portion avant 40 inclinée par rapport à la paroi avant 36, et une portion arrière 42 connectée au support 26, telle une traverse supérieure du support 26. La paroi avant 36 s'étend principalement verticalement. La paroi arrière 38 est étagée. Elle forme une marche. La portion avant 40 est décalée verticalement par rapport à la portion arrière 42 ; par exemple d'au moins 20 mm et/ou d'au plus 100 mm. Leur décalage vertical est compris entre : 40 mm et 80 mm, préférentiellement entre 50 mm et 70 mm.

La portion arrière 42 comprend une zone de liaison 48 fixée au support 26 grâce à des moyens de fixation 68, tel un axe de fixation. La zone de liaison 48 est délimitée par des moyens sécables 50. Cela permet de désolidariser la portion arrière 42 du support 26 en cas de collision avec un piéton, notamment en cas de choc avec une tête 66 d'humain. L'invention améliore la sécurité pour les piétons, notamment lorsqu'il s'agit d'enfants dont la tête 66 est verticalement au niveau du capot 34, et proche de l'armature 30.

La paroi avant 36 comprend des fentes de fixation 46 de l'écran extérieur 20. Les fentes de fixation 46 peuvent être des fentes horizontales. Les fentes de fixation 46 peuvent comprendre des boutonnières.

La portion avant 40 et la portion arrière 42 sont généralement horizontales et décalées verticalement. La paroi arrière 38 comprend une portion de jonction 52. La portion de jonction 52 forme une rampe. Elle connecte la portion arrière 42 à la portion avant 40. La portion de jonction 52 est inclinée par rapport à la portion arrière 42 et la portion avant 40. La portion de jonction 52 est inclinée par rapport à l'horizontale, et donc par rapport à la portion avant 40 et à la portion arrière 42, d'un angle compris entre 20° et 70°, préférentiellement compris entre 30° et 60°.

La paroi arrière 38 comprend une nervure de rigidification 54. La nervure de rigidification 54 forme une cloison longitudinale. Elle maintient l'angle entre la portion arrière 42 et la portion de jonction 52. Cela rigidifie l'armature 30 en cas de choc piéton, et augmente les concentrations de contraintes autour des moyens sécables 50 afin de garantir leur rupture dans des conditions prédéfinies.

La paroi arrière 38 comprend une zone charnière 62 entre la portion avant 40 et la portion de jonction 52. La zone charnière 62 est apte à réduire une inclinaison entre la portion avant 40 et la portion de jonction 52 en cas de choc piéton. La zone charnière 62 a l'effet inverse de la nervure de rigidification 54 sur le profil de la paroi arrière 38.

En cas de choc piéton, un membre, par exemple la tête 66 ou un bras, appuie vers la portion avant 40 qui bascule. La portion avant 40 transmet son mouvement de basculement à la portion arrière 42 via la portion de jonction 52 qui bascule dans le sens opposé grâce à la zone charnière 62. La portion avant 40 et la portion de jonction 52 s'abaissent, et se déplient l'une par rapport à l'autre. Grâce à la nervure de rigidification 54, la portion de jonction 52 soulève plus efficacement la portion arrière 42 ; et favorise la rupture des moyens sécables 50. L'armature 30 se déforme plus facilement. Les potentiels points durs sont mieux éliminés.

La paroi arrière 38, préférentiellement la portion avant 40, présente en outre des moyens sécables avant (non représentée) aptes à coopérer avec une butée 70 du capot avant 34. Les moyens sécables avant sont aptes à rompre en cas de choc piéton contre le capot avant 34, notamment au niveau de la butée 70. Cet aspect permet de libérer l'armature, et donc d'encore supprimer de potentiels points durs.

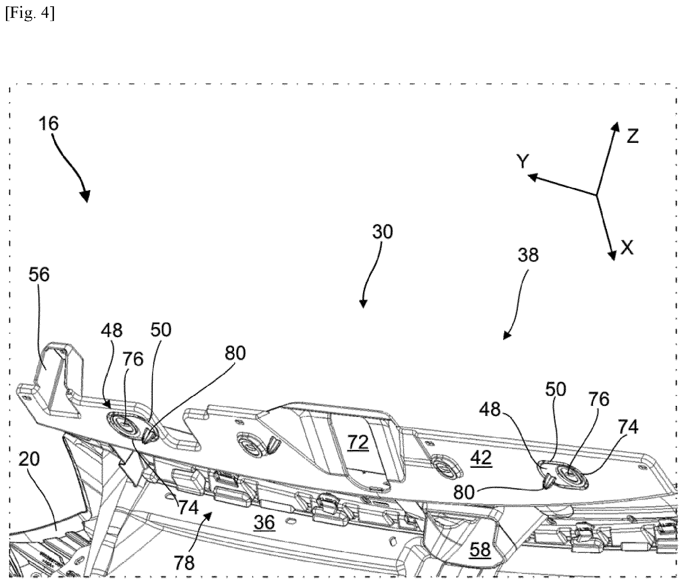

La figure 4 présente une armature 30 d'ensemble de pare-chocs avant 16 de véhicule automobile. Le véhicule automobile peut correspondre à celui présenté en relation avec l'une des figures 1 à 3. Le support n'est pas représenté par soucis de clarté.

L'armature 30, en particulier chaque zone latérale de la portion arrière 42 de la paroi arrière 38, comprend une zone de liaison 48 destinée à être liée à un support du véhicule automobile. Les zones de liaisons 48 peuvent être symétriques. L'écran extérieur 20 apparaît en arrière-plan et est fixé à la paroi avant 36 de l'armature 30. La paroi avant 36 et la paroi arrière 38 sont des parois transversales.

La portion arrière 42 comprend un ajour central arrière 72. Il est centré sur l'ajour central avant 58. Au moins un des deux ajours (58 ;72) est utilisé pour le verrouillage du capot avant 34. La portion arrière 42 comprend un pilier de maintien 56. Le pilier de maintien 56 est essentiellement évidé. Il forme un boîtier. Le pilier de maintien 56 comprend des moyens de fixation. Le pilier de maintien 56 est transversalement vers l'extérieur des moyens sécables 50 et des zones de liaison 48.

Dans la suite de la description, par soucis de clarté, les caractéristiques seront définies en relation avec l'une des zones de liaison 48 ; toutefois ces caractéristiques s'appliquent à chacune des zones de liaison 48 de l'armature 30.

La zone de liaison 48 est munie de moyens sécables 50. Les moyens sécables 50 comprennent une découpe 74 traversant verticalement la portion arrière 42 de la paroi arrière 38. La découpe 74 peut être discontinue. Elle peut présenter des ponts à rupture programmée. La découpe 74 peut décrire un rectangle ou un ovale, ou une forme oblongue.

La zone de liaison 48 comprend différents moyens de positionnement et/ou de fixation. La zone de liaison 48 comprend un orifice de fixation 76 traversant l'armature. La paroi arrière 38 comprend une face inférieure 78 et une face supérieure. La zone de liaison 48 comprend un pion de positionnement 80 faisant saillie sous la face inférieure 78. Le pion de positionnement 80 est transversalement à distance de l'orifice de fixation 76.

L'armature 30 comprend un matériau plastique. Elle peut être réalisée en matériau thermoplastique ou en matériau thermodurcissable. A titre d'exemple, le matériau plastique est sélectionné dans le groupe comprenant les résines polypropylene, polyamide, polyphtala-mide, polyetherethercétone, polysulfure de phénylène, polyamide-imide, polyetherimide, polyarylamide, polyépoxyde, polyester insaturés, vinylester ou polyester-vinylester.

L'armature 30 est venue de matière et/ou monobloc, ce qui optimise son coût, sa rigidité. Elle peut être produite par injection.

Son comportement en cas de choc est plus prévisible. La rupture programmée des moyens sécables 50 est davantage reproductible. Ceci accroît la sécurité pour les piétons, ou d'autre usagers tels que les cyclistes.

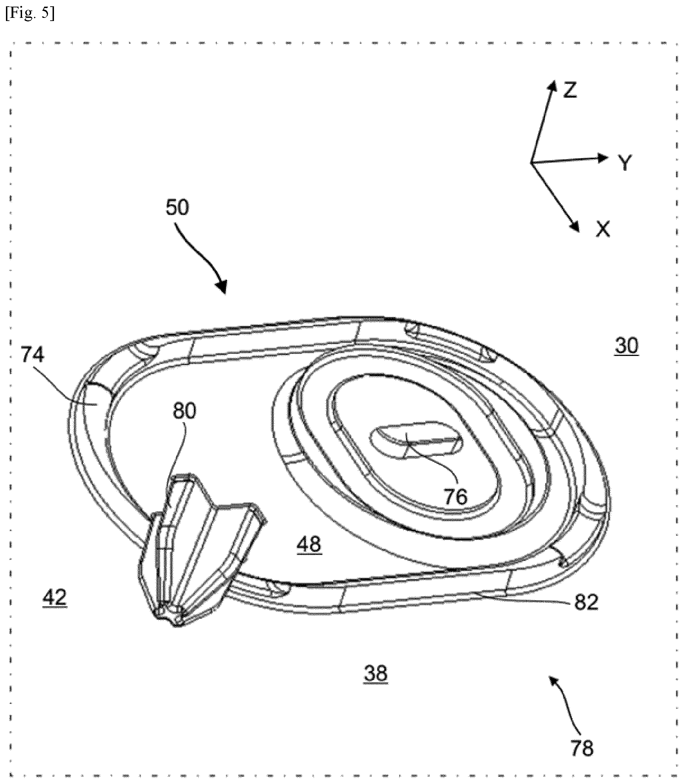

La figure 5 présente une zone de liaison 48 d'armature 30 d'ensemble de pare-chocs avant de véhicule automobile. Le véhicule automobile peut correspondre à celui présenté en relation avec l'une des figures 1 à 4.

La zone de liaison 48 est formée dans la portion arrière 42 de la paroi arrière 38. La portion arrière 42 entoure la zone de liaison 48 afin d'améliorer son maintien tant que les moyens sécables 50 sont présent. La zone de liaison 48 comprend un orifice de fixation 76 ouvert verticalement. Il traverse l'armature 30 à l'intérieur de la zone de liaison 48. L'orifice de fixation 76 est apte à recevoir une agrafe de fixation. Il peut être un orifice de positionnement longitudinal.

La paroi arrière 38 comprend une face supérieure et une face inférieure 78 opposée à la face supérieure suivant l'épaisseur de la portion arrière 42. La zone de liaison 48 comprend un pion de positionnement 80 faisant saillie en face inférieure 78. Le pion de positionnement 80 fait saillie vers le bas depuis la zone de liaison 48. Le pion de positionnement 80 forme un doigt d'indexage en position. Il peut servir de guide lors du montage de l'armature 30 sur le support. La zone de liaison 48 peut comprendre des moyens de fixation, par exemple l'orifice de fixation 76. La zone de liaison 48 peut être une zone de fixation.

Les moyens sécables 50 définissent un tracé de rupture permettant d'éjecter la portion arrière du support. Les moyens sécables 50 entourent l'orifice de fixation 76 et/ou le pion de positionnement 80.

Les moyens sécables 50 comprennent une ligne de rupture 82 entourant la zone de liaison 48. La ligne de rupture 82 forme une boucle fermée autour de la zone de liaison 48. La ligne de rupture 82 peut être formée par une gorge. La ligne de rupture 82 peut être matérialisée par un amincissement de la plaque formant la portion arrière 38. L'amincissement est par exemple le long d'une ligne entourant la zone de liaison 48. Selon une option, la ligne de rupture 82 forme un rectangle ou une forme oblongue.

Selon un mode de réalisation, les moyens sécables 50 comprennent une découpe 74 traversant la portion arrière 42 de la paroi arrière 38. La découpe 74 forme un passage de la portion arrière 42. La découpe 74 délimite la zone de liaison 48.

Ainsi, la zone de liaison 48 forme une fixation fusible. Les moyens sécables 50 forment des moyens frangibles. Ils sont aptes à se couper lorsqu'un effort supérieur ou égal à un seuil d'effort y est appliqué.

Dans le présent mode de réalisation, la zone de liaison est au cœur de la portion arrière de la paroi arrière.

Selon une variante de l'invention, la portion arrière comprend un bord arrière et une patte de liaison s'étendant vers l'arrière depuis le bord arrière ; ladite patte de liaison formant la zone de liaison et étant attachée au support. Dans cette variante, les moyens sécables sont une ligne droite longitudinalement au niveau du bord arrière de sorte à détacher la portion arrière du support ; et donc de la patte arrière ; en cas de choc piéton.

## Revendications

1. Armature (30) d'ensemble de pare-chocs avant (16) de véhicule automobile (10), l'armature (30) comprenant une paroi avant (36) destinée à être fixée à un écran extérieur (20) d'ensemble de pare-chocs avant (16), et une paroi arrière (38) ; la paroi arrière (38) comprenant une portion avant (40) inclinée par rapport à la paroi avant (36), et une portion arrière (42) ; **caractérisée en ce que** la portion arrière (42) comprend une zone de liaison (48) destinée à être liée à un support (26) du véhicule automobile (10), la zone de liaison (48) comprenant des moyens sécables (50) de sorte à détacher la portion arrière (42) du support (26) en cas de choc piéton.

2. Armature (30) selon la revendication 1, **caractérisée en ce que** la paroi arrière (38) comprend une face inférieure (78) et une face supérieure, la zone de liaison (48) comprenant un pion de positionnement (80) faisant saillie en face inférieure (78) ; et/ou la zone de liaison (48) comprend un orifice de fixation (76) traversant la portion arrière (42).

3. Armature (30) selon l'une des revendications 1 à 2, **caractérisée en ce que** les moyens sécables (50) comprennent une ligne de rupture (82) entourant la zone de liaison (48), préférentiellement la ligne de rupture (82) forme un rectangle ou une forme oblongue.

4. Armature (30) selon l'une des revendications 1 à 3, **caractérisée en ce que** les moyens sécables (50) comprennent une découpe (74) traversant la portion arrière (42) de la paroi arrière (38).

5. Armature (30) selon l'une des revendications 1 à 4, **caractérisée en ce que** la paroi arrière (38) comprend une portion de jonction (52) s'étendant de la portion avant (40) à la portion arrière (42), la portion de jonction (52) étant inclinée par rapport à la portion arrière (42) et la portion avant (40), la portion avant (40) et la portion arrière (42) étant décalées verticalement.

6. Armature (30) selon la revendication 5, **caractérisé en ce que** la paroi arrière (38) comprend une nervure de rigidification (54) s'étendant le long de la portion arrière (42) et la portion de jonction (52) afin de maintenir une inclinaison entre la portion arrière (42) et la portion de jonction (52) en cas de choc piéton, préférentiellement la portion avant (40) et la portion arrière (42) sont parallèles.

7. Armature (30) selon l'une des revendications 5 à 6, **caractérisée en ce que** la paroi arrière (38) comprend une zone charnière (62) entre la portion avant (40) et la portion de jonction (52) ; préférentiellement la zone charnière (62) est apte à réduire une inclinaison entre la portion avant (40) et la portion de jonction (52) en cas de choc piéton.

8. Armature (30) selon l'une des revendications 1 à 7, **caractérisée en ce que** la portion arrière (42) comprend un pilier de maintien (56) comprenant des moyens de fixation, les moyens sécables (50) étant transversalement à distance dudit pilier de maintien (56).

9. Véhicule automobile (10) comprenant un ensemble de pare-chocs avant (16) avec une armature (30), **caractérisé en ce que** l'armature (30) est conforme à l'une des revendications 1 à 8, préférentiellement les moyens sécables (50) sont des moyens sécables arrière ; la paroi arrière (38) comprenant en outre des moyens sécables avant (60) aptes à coopérer avec une butée (70) d'un capot avant (34), lesdits moyens sécables avant (60) étant aptes à rompre en cas de choc piéton sur le capot avant (34).

10. Véhicule automobile (10) selon la revendication 9, **caractérisé en ce que** le véhicule automobile (10) comprend un support (26) qui est un cadre de façade avant (28), préférentiellement le véhicule automobile (10) comprend en outre un échangeur de chaleur (44) en arrière dudit cadre de façade avant (28).

## Patentansprüche

1. Anker (30) einer vorderen Stoßfängerbaugruppe (16) eines Kraftfahrzeugs (10), wobei der Anker (30) eine vordere Wand (36), die an einem äußeren Schirm (20) der vorderen Stoßfängerbaugruppe (16) befestigt werden soll, und eine hintere Wand (38) umfasst; wobei die hintere Wand (38) einen vorderen Abschnitt (40), der zur vorderen Wand (36) geneigt ist, und einen hinteren Abschnitt (42) umfasst; **dadurch gekennzeichnet, dass** der hintere Abschnitt (42) einen Bereich umfasst Verbindung (48) zur Verbindung mit einem Träger (26) des Kraftfahrzeugs (10), wobei der Verbindungsbereich (48) trennbare Mittel (50) aufweist, um den hinteren Abschnitt (42) des Trägers (26) bei einem Fußgängeraufprall zu lösen.

2. Anker (30) nach Anspruch 1, **dadurch gekennzeichnet, dass** die Rückwand (38) eine Unterseite (78) und eine Oberseite aufweist, wobei der Verbindungsbereich (48) einen Positionierstift (80) aufweist, der von der Unterseite (78) vorsteht, und/oder der Verbindungsbereich (48) eine Befestigungsöffnung (76) aufweist, die durch den Rückenteil (42) hindurchgeht.

3. Armatur (30) nach einem der Ansprüche 1 bis 2, **dadurch gekennzeichnet, dass** die teilbaren Mittel (50) eine Bruchlinie (82) umfassen, die die Verbindungszone (48) umgibt, wobei vorzugsweise die Bruchlinie (82) ein Rechteck oder eine längliche Form bildet.

4. Rahmen (30) nach einem der Ansprüche 1 bis 3, **dadurch gekennzeichnet, dass** die teilbaren Mittel (50) einen Ausschnitt (74) umfassen, der durch den hinteren Abschnitt (42) der Rückwand (38) verläuft.

5. Anker (30) nach einem der Ansprüche 1 bis 4, **dadurch gekennzeichnet, dass** die Rückwand (38) einen Verbindungsabschnitt (52) umfasst, der sich vom vorderen Abschnitt (40) zum hinteren Abschnitt (42) erstreckt, wobei der Verbindungsabschnitt (52) in Bezug auf den hinteren Abschnitt (42) geneigt ist und der vordere Abschnitt (40), wobei der vordere Abschnitt (40) und der hintere Abschnitt (42) vertikal versetzt sind.

6. Anker (30) nach Anspruch 5, **dadurch gekennzeichnet, dass** die Rückwand (38) eine Versteifungsrippe (54) aufweist, die sich entlang des Rückenteils (42) und des Verbindungsabschnitts (52) erstreckt, um bei einem Fußgängeraufprall eine Neigung zwischen dem Rückenteil (42) und dem Verbindungsabschnitt (52) aufrechtzuerhalten, wobei vorzugsweise der vordere Teil (40) und der hintere Teil (42) parallel sind.

7. Armatur (30) nach einem der Ansprüche 5 bis 6, **dadurch gekennzeichnet, dass** die Rückwand (38) einen Scharnierbereich (62) zwischen dem vorderen Abschnitt (40) und dem Verbindungsabschnitt (52) aufweist; wobei vorzugsweise der Scharnierbereich (62) in der Lage ist, eine Neigung zwischen dem vorderen Abschnitt (40) und dem Verbindungsabschnitt (52) im Falle eines Fußgängeraufpralls zu verringern.

8. Anker (30) nach einem der Ansprüche 1 bis 7, **dadurch gekennzeichnet, dass** der hintere Abschnitt (42) einen Haltepfosten (56) umfasst, der Befestigungsmittel umfasst, wobei die trennbaren Mittel (50) quer von dem Haltepfosten (56) beabstandet sind.

9. Kraftfahrzeug (10), das eine vordere Stoßfängeranordnung (16) mit einem Anker (30) umfasst, **dadurch gekennzeichnet, dass** der Anker (30) einem der Ansprüche 1 bis 8 entspricht, wobei vorzugsweise die trennbaren Mittel (50) hintere trennbare Mittel sind; wobei die Rückwand (38) ferner vordere trennbare Mittel (60) umfasst, die mit einem Anschlag (70) einer vorderen Haube (34) zusammenwirken können, wobei die vorderen trennbaren Mittel (60) zum Brechen geeignet sind Bei einem Fußgängeraufprall auf die Fronthaube (34).

10. Kraftfahrzeug (10) nach Anspruch 9, **dadurch gekennzeichnet, dass** das Kraftfahrzeug (10) einen Träger (26) aufweist, der ein vorderer Fassadenrahmen (28) ist, wobei vorzugsweise das Kraftfahrzeug (10) ferner hinter dem vorderen Fassadenrahmen (28) einen Wärmetauscher (44) aufweist.

## Claims

1. Frame (30) of a front bumper assembly (16) of a motor vehicle (10), the frame (30) comprising a front wall (36) intended to be fixed to an outer screen (20) of a front bumper assembly (16), and a rear wall (38); the rear wall (38) comprising a front portion (40) inclined by report to the front wall (36), and a rear portion (42); wherein the rear portion (42) comprises a zone connecting zone (48) intended to be connected to a support (26) of the motor vehicle (10), the connecting part (48) comprising breakable means (50) so as to detach the rear part (42) from the support (26) in the event of a pedestrian impact.

2. Armature (30) according to claim 1, **characterised in that** the rear wall (38) comprises a lower face (78) and an upper face, the connecting zone (48) comprising a positioning pin (80) projecting on the lower face (78); and/or the connecting zone (48) comprises a fixing orifice (76) passing through the rear portion (42).

3. Reinforcement (30) according to one of claims 1 to 2, **characterised in that** the breakable means (50) comprise a break point line (82) surrounding the connecting zone (48), preferably the break point line (82) forms a rectangle or an oblong shape.

4. Reinforcement (30) according to one of claims 1 to 3, **characterised in that** the breakable means (50) comprise a cutout (74) passing through the rear portion (42) of the rear wall (38).

5. Armature (30) according to one of claims 1 to 4, **characterised in that** the rear wall (38) comprises a junction portion (52) extending from the front portion (40) to the rear portion (42), the junction portion (52) being inclined by report to the rear portion (42) and the front portion (40), the front portion (40) and the rear portion (42) being offset vertically.

6. Armature (30) according to claim 5, **characterised in that** the rear wall (38) comprises a stiffening rib (54) extending along the rear portion (42) and the junction portion (52) in order to keep an inclination between the rear portion (42) and the junction portion (52) in the event of a pedestrian impact, preferably the front portion (40) and the rear portion (42) are parallel.

7. Reinforcement (30) according to one of claims 5 to 6, **characterised in that** the rear wall (38) comprises a hinge zone (62) between the front portion (40) and the junction portion (52); preferably, the hinge zone (62) is capable of reducing an inclination between the front portion (40) and the junction portion (52) in the event of a pedestrian impact.

8. Reinforcement (30) according to one of claims 1 to 7, **characterised in that** the rear portion (42) comprises a holding pillar (56) comprising fixing means, the breakable means (50) being transversely at a distance from the said holding pillar (56).

9. Motor vehicle (10) comprising an assembly of front bumpers (16) with a framework (30), wherein the framework (30) is in accordance with one of claims 1 to 8, preferably the breakable means (50) are rear breakable means; the rear wall (38) further comprising front breakable means (60) capable of cooperating with a stop (70) of a front cover (34), said front breakable means (60) being capable of breaking in the event of a pedestrian impact on the pedestrian front cover (34).

10. Motor vehicle (10) according to claim 9, **characterised in that** the motor vehicle (10) comprises a support (26) which is a front facade frame (28), preferably the motor vehicle (10) further comprises a heat exchanger (44) at the rear of said front facade frame (28).
